# EUROPÄISCHE PATENTSCHRIFT

(11) **EP 1 490 255 B1**
(45) Veröffentlichungstag und Bekanntmachung des Hinweises auf die Patenterteilung: **05.10.2005**
(21) Anmeldenummer: 03745284.4
(22) Anmeldetag: 28.03.2003
(51) Int. Cl.: B62D 25/14, F16B 43/00

(54) **ANORDNUNG MIT EINEM ERSTEN BAUTEIL, EINEM ZWEITEN BAUTEIL UND EINEM VERBINDUNGSELEMENT**
ARRANGEMENT WITH A FIRST COMPONENT, A SECOND COMPONENT, AND A CONNECTING ELEMENT
ENSEMBLE COMPRENANT UN PREMIER COMPOSANT, UN DEUXIEME COMPOSANT ET UN ELEMENT DE LIAISON

(30) Priorität: 28.03.2002 EP 02007136; 30.04.2002 DE 10220329
(43) Veröffentlichungstag der Anmeldung: 29.12.2004
(73) Patentinhaber: Progress-Werk Oberkirch Aktiengesellschaft, 77704 Oberkirch (DE)
(72) Erfinder: SCHMIEDER, Hansjörg, 77704 Oberkirch-Zusenhofen (DE); MERKLE, Hans, 79346 Endingen (DE)
(74) Vertreter: Heuckeroth, Volker
(86) Internationale Anmeldenummer: PCT/EP2003/003267
(87) Internationale Veröffentlichungsnummer: WO 2003/082656

(56) Entgegenhaltungen:
- DE-A- 19 741 551
- US-A- 4 013 372
- US-A- 4 190 375

## Beschreibung

Die Erfindung betrifft eine Anordnung mit einem ersten Bauteil und einem zweiten Bauteil, und mit einem Verbindungselement zum beabstandeten Verbinden des ersten Bauteils mit dem zweiten Bauteil, wobei das erste Bauteil zumindest an einem mit dem zweiten Bauteil zu verbindenden Ende als Profil, insbesondere rohrförmig, ausgebildet ist, welches Profil eine Längsmittelachse definiert, wobei das Verbindungselement ein axial bewegliches Distanzstück zum Überbrücken des Abstandes des zu verbindenden Endes des ersten Bauteils zu dem zweiten Bauteil, weiterhin zumindest ein mit einer Wand des ersten Bauteils klemmend in Anlage bringbares Klemmstück und ferner einen Betätigungsmechanismus aufweist, der mit dem Distanzstück und dem Klemmstück derart in Wirkverbindung steht, dass bei Betätigung des Betätigungsmechanismus das Distanzstück axial bis zur Anlage an das zweite Bauteil bewegt und das Klemmstück mit der Wand des ersten Bauteils klemmend in Eingriff gebracht wird.

Eine solche Anordnung ist aus dem Dokument DE 197 41 551 A1 bekannt.

Im Sinne der vorliegenden Erfindung sind die Begriffe "erstes Bauteil" und "zweites Bauteil" allgemein zu verstehen. Bei dem ersten Bauteil kann es sich um ein Profil, insbesondere um ein Hohlprofil handeln, das in Umfangsrichtung einen vollumfänglich geschlossenen Mantel oder auch einen teilweise offenen Mantel aufweist. Im letzteren Fall kann das erste Bauteil beispielsweise ein U- oder C-Profil oder auch allgemein ein Rechteckprofil sein. Das zweite Bauteil kann beispielsweise ein Profil oder eine Platte sein.

Ein spezieller Anwendungsfall der eingangs genannten Anordnung ist das Verbinden eines Zugrohrs mit einer A-Säule eines Kraftfahrzeuges. Bei Kraftfahrzeugen verläuft üblicherweise zwischen den im wesentlichen vertikalen A-Säulen ein horizontaler Querträger, an dem u.a. die Instrumententafel befestigt ist. Zusätzlich zu dem die Instrumententafel tragenden Querträger kann jedoch noch ein zusätzliches Zugrohr zwischen den beiden A-Säulen verspannt werden. Das zusätzliche Zugrohr kann beispielsweise dazu dienen, in einem Crash-Fall ein Abknicken der A-Säulen nach außen zu vermeiden.

Ein Problem der Befestigung eines Zugrohrs zwischen den A-Säulen eines Kraftfahrzeuges besteht darin, dass der Abstand zwischen den A-Säulen selbst bei demselben Fahrzeugtyp aufgrund von Fertigungstoleranzen von Fahrzeug zu Fahrzeug variieren kann. Da es mit einem erheblichen Kosten- und Zeitmehraufwand verbunden wäre, an die vorkommenden Abstände zwischen den A-Säulen angepaßte Zugrohre bereitzustellen, ist es günstiger, die Zugrohre mit einer minimalen Länge zuzuschneiden, die dem aufgrund der Toleranzen minimalen Abstand zwischen den A-Säulen entspricht. Daraus ergibt sich wiederum das Problem, dass ein solches mit minimaler Länge zugeschnittenes Zugrohr bei einem Fahrzeug, bei dem der Abstand zwischen den A-Säulen aufgrund der Toleranzen größer ist, auf Abstand zu zumindest einer der A-Säulen befestigt werden muß. Daher ist eine Verbindungstechnik erforderlich, die einen Längenausgleich zwischen dem mit der A-Säule zu befestigenden Ende des Zugrohrs und der bzw. den A-Säulen ermöglicht, d.h. die den möglichen Toleranzen Rechnung trägt.

Wünschenswert ist eine Anordnung, mit der ein Zugrohr mit einer A-Säule auf Abstand verbunden werden kann, und die zudem in der Lage ist, die im Falle eines Crashes auftretenden hohen Kräfte, die mehr als 80 kN betragen können, von der A-Säule auf das Zugrohr zu übertragen, ohne dass sich die Verbindung zwischen Zugrohr und A-Säule löst und die A-Säule seitlich nach außen abknickt.

Aus der oben genannten DE 197 41 551 A1 ist eine Verbindungsanordnung zum Verbinden eines Querträgers mit den A-Säulen eines Kraftfahrzeuges beschrieben, mit der ein axialer Toleranzausgleich bei gleichzeitig hoher Zug- und Druckfestigkeit der Verbindung erreicht werden soll. Das bekannte Verbindungselement weist ein axial verschiebliches Distanzstück sowie ein radial spreizbares Klemmstück und einen Betätigungsmechanismus zum Spreizen des Klemmstückes auf. Das Klemmstück wird über den Betätigungsmechanismus mit der Wand des ersten Bauteils klemmend in Eingriff gebracht.

Dennoch ist bei dieser bekannten Anordnung nicht auszuschließen, dass bei besonders hohen Zugkräften, die auf die Verbindung wirkt, der Reibschluss zwischen dem Klemmstück und der Wand des ersten Bauteils überwunden und das Klemmstück von dem ersten Bauteil abrutscht, wodurch das erste Bauteil von dem zweiten Bauteil getrennt wird.

Der Erfindung liegt die Aufgabe zugrunde, eine Anordnung der eingangs genannten Art dahingehend weiterzubilden, dass die Festigkeit der Verbindung zwischen dem ersten Bauteil und dem zweiten Bauteil erhöht wird.

Erfindungsgemäß wird diese Aufgabe hinsichtlich der eingangs genannten Anordnung durch die Merkmale des kennzeichnenden Teils des Anspruchs 1 gelöst.

Ein Vorteil der erfindungsgemäßen Ausgestaltung der Anordnung besteht darin, dass die Zugbelastbarkeit der Verbindung des ersten Bauteils mit dem zweiten Bauteil gegenüber der bekannten Anordnung erhöht ist. Das zumindest eine Klemmstück, das mit der Wand des ersten Bauteils überwiegend reibschlüssig in Eingriff kommt, kann bei übermäßigen Zugbelastungen relativ zum ersten Bauteil rutschen. Dieses Rutschen ist jedoch durch die an dem ersten Bauteil vorgesehene erste Stufe begrenzt oder von vornherein unterbunden, je nachdem, in welchem Abstand zur Stufe das Klemmstück mit dem ersten Bauteil in Eingriff kommt, wenn der Betätigungsmechanismus beim Verbinden des ersten Bauteils mit dem zweiten Bauteil betätigt wird. Die erfindungsgemäß vorgesehene erste Stufe am ersten Bauteil verhindert somit eine Trennung der Verbindung zwischen zweitem und erstem Bauteil, wodurch die Festigkeit der Verbindung erheblich verbessert ist.

Die erfindungsgemäße Anordnung vereint somit in sich die Funktion eines Längenausgleiches, der durch das axial bewegliche Distanzstück bewerkstelligt wird, und der Ausübung einer Klemmkraft auf das erste Bauteil, die von dem zumindest einen Klemmstück aufgebracht wird, wobei zusätzlich die erfindungsgemäß vorgesehenen Stufen die Betriebssicherheit der Anordnung bei hohen Kräften deutlich verbessert. Somit ist die erfindungsgemäße Anordnung in der Lage, das erste Bauteil mit dem zweiten Bauteil so fest zu verbinden, dass bei der Anwendung der Anordnung zum Verbinden eines Zugrohrs mit der A-Säule die im Falle eines Crashes auftretenden hohen Kräfte von dem Verbindungselement auf das erste Bauteil, d.h. das Zugrohr, übertragen werden, ohne dass das Zugrohr an der Verbindungsstelle von der A-Säule abreißt.

Die Stufe kann beispielsweise durch eine Rohrendbearbeitung, beispielsweise Aufweiten und Bördeln, als Kante oder Rand in einstückiger Ausgestaltung des ersten Bauteils oder durch Einrollen einer Sicke, oder durch Anschweißen, Anlöten, Ankleben oder Aufschrumpfen einer Buchse an dem ersten Bauteil ausgebildet werden. Wenn das erste Bauteil oder zumindest das mit dem zweiten Bauteil zu verbindende Ende aus einem dickeren Material gefertigt ist, kann die zumindest eine Stufe auch durch spanende Bearbeitung hergestellt werden.

Weiterhin ist es bevorzugt, wenn das mit dem zweiten Bauteil zu verbindende Ende des ersten Bauteils rohrförmig ausgebildet ist, und wenn sich die erste und/oder zweite Stufe vollumfänglich an der Wand des ersten Bauteils erstreckt.

Durch eine solche vollumfängliche Ausgestaltung der ersten und/oder zweiten Stufe wird die Zugfestigkeit der Anordnung weiter verbessert. Die zumindest eine oder beide Stufen können als radial nach innen gerichtete Vorsprünge an dem ersten Bauteil ausgebildet sein.

In einer weiteren bevorzugten Ausgestaltung ist das mit dem zweiten Bauteil zu verbindende Ende des ersten Bauteils als mit dem übrigen Teil des ersten Bauteils fest verbundenes Ansatzstück, das das erste Bauteil außenseitig teilweise übergreift, ausgebildet, an dem die erste und/oder zweite Stufe vorhanden ist.

Der Vorteil der Ausbildung der ersten und/oder zweiten Stufe an einem mit dem ersten Bauteil fest verbundenen Ansatzstück hat den Vorteil, dass das Ansatzstück gegenüber dem übrigen Körper des ersten Bauteils aus einem gegenüber dem übrigen Teil des Rohrs härteren und/oder wanddickeren Material ausgebildet werden kann, wodurch die Zugfestigkeit der Verbindung bei gleichzeitiger Gewichts- und Kosteneinsparung noch weiter verbessert werden kann. Im Falle der bevorzugten Verwendung des erfindungsgemäßen Verbindungselements zum Verbinden eines Zugrohres mit einer A-Säule kann das Ansatzstück als Hülse auf das Ende des Zugrohres, dieses außenseitig übergreifend, aufgeschweißt sein.

In einer weiteren bevorzugten Ausgestaltung sind das Distanzstück und das Klemmstück als separate Elemente ausgebildet.

Hierbei ist von Vorteil, dass das Distanzstück und das Klemmstück unabhängig voneinander beweglich sind, wodurch beispielsweise das Klemmstück unabhängig von der Position des Distanzstückes, die aufgrund des zu überbrückenden toleranzbedingt variierenden Abstands variieren kann, an einer vorbestimmten Position mit dem ersten Bauteil in Eingriff gebracht werden kann.

In einer weiteren bevorzugten Ausgestaltung ist das Verbindungselement so ausgebildet, dass das Klemmstück mittels des Betätigungsmechanismus durch eine Überlagerung aus einer axialen und einer quer zur Längsrichtung des ersten Bauteils gerichteten Bewegung oder nur durch eine quer zur Längsrichtung des ersten Bauteils gerichtete Bewegung mit der Wand des ersten Bauteils in Eingriff bringbar ist.

Bei der ersten Alternative ist von Vorteil, dass sich das Klemmstück durch die Überlagerung aus axialer und quer zur Längsrichtung des ersten Bauteils gerichteter Bewegung in das Material der Wand des ersten Bauteils "eingraben" bzw "einschneiden" kann, wodurch nicht nur ein reibschlüssiger, sondern auch formschlüssiger Eingriff des Klemmstücks mit der Wand des ersten Bauteils erreicht wird. Auf diese Weise kann die Verbindung des ersten Bauteils mit dem zweiten Bauteil besonders hohen Kräften standhalten. Bei der zweiten Alternative ist von Vorteil, dass die Stelle, an der das Klemmstück mit dem ersten Bauteil in Eingriff kommt, axial wohldefiniert ist.

In einer weiteren bevorzugten Ausgestaltung weist der Betätigungsmechanismus einen Schraubmechanismus auf, der so ausgebildet ist, dass seine fortlaufende Betätigung zunächst das Distanzstück mit dem zweiten Bauteil in Anlage und anschließend das Klemmstück mit der Wand des ersten Bauteil in Eingriff bringt.

Der Vorteil hierbei besteht darin, dass mittels des Schraubmechanismus ein besonders einfach zu handhabender Betätigungsmechanismus geschaffen wird, der sowohl auf das Distanzstück als auch das Klemmstück einwirkt, und zwar so, dass zunächst das Distanzstück zur Überbrückung des Abstands des ersten Bauteils mit dem zweiten Bauteil in Anlage gebracht wird, und durch weiteres Betätigen des Schraubmechanismus, beispielsweise dem Drehen einer Schraube, das Klemmstück mit der Wand des ersten Bauteils in Eingriff gebracht wird.

In diesem Zusammenhang ist es bevorzugt, wenn der Schraubmechanismus eine Schraube aufweist, mit dem eine Mutter im Gewindeeingriff steht, die sich beim Drehen der Schraube in Richtung auf das zweite Bauteil zu bewegt und dabei direkt oder indirekt das Distanzstück axial bewegt.

Hierdurch wird ein konstruktiv vorteilhaft einfach aufgebauter Betätigungsmechanismus für das Distanzstück geschaffen, um das Distanzstück axial zu bewegen. Die Schraube wirkt dabei vorzugsweise als Schieber direkt oder indirekt auf das Distanzstück, das vorzugsweise axial gleitend auf der Schraube gelagert ist.

In einer weiteren bevorzugten Ausgestaltung wirkt die Mutter beim Drehen der Schraube direkt oder indirekt auf das Klemmstück, um diese mit der Wand des ersten Bauteils in Eingriff zu bringen.

Insbesondere in Verbindung mit der zuvor genannten Ausgestaltung wird durch diese Maßnahmen ein konstruktiv besonders einfacher Mechanismus geschaffen, da lediglich eine Mutter erforderlich ist, um sowohl das Distanzstück als auch das Klemmstück zu bewegen.

Erfindungsgemäß wird die Anordnung nach einer oder mehreren der zuvor genannten Ausgestaltungen zum Verbinden eines Zugrohrs mit einer A-Säule eines Kraftfahrzeuges, verwendet.

Die Anordnung kann aber auch zur Verbindung des die Instrumententafel tragenden Querträgers mit der bzw. den A-Säulen verwendet werden.

Weitere Vorteile und Merkmale ergeben sich aus der nachfolgenden Beschreibung und der beigefügten Zeichnung.

Ausgewählte Ausführungsbeispiele der Erfindung sind in der Zeichnung dargestellt und werden mit Bezug auf diese hiernach näher beschrieben. Es zeigen:
- Fig. 1: eine perspektivische Darstellung einer Anordnung aus zwei Bauteilen und einem Verbindungselement zum Verbinden der zwei Bauteile gemäß einem ersten Ausführungsbeispiel;
- Fig. 2: die Anordnung in Fig. 1 im Längsschnitt; und
- Fig. 3: eine Anordnung im Längsschnitt gemäß einem weiteren Ausführungsbeispiel;

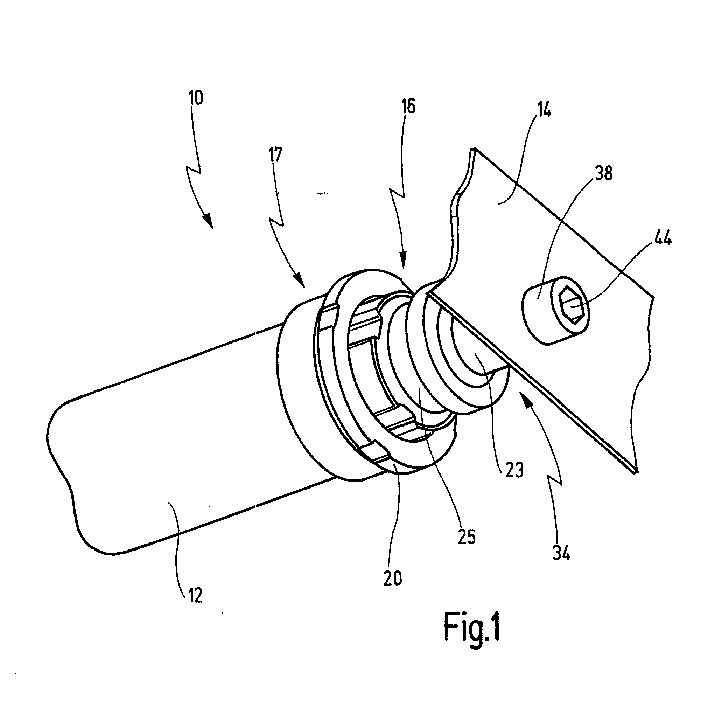

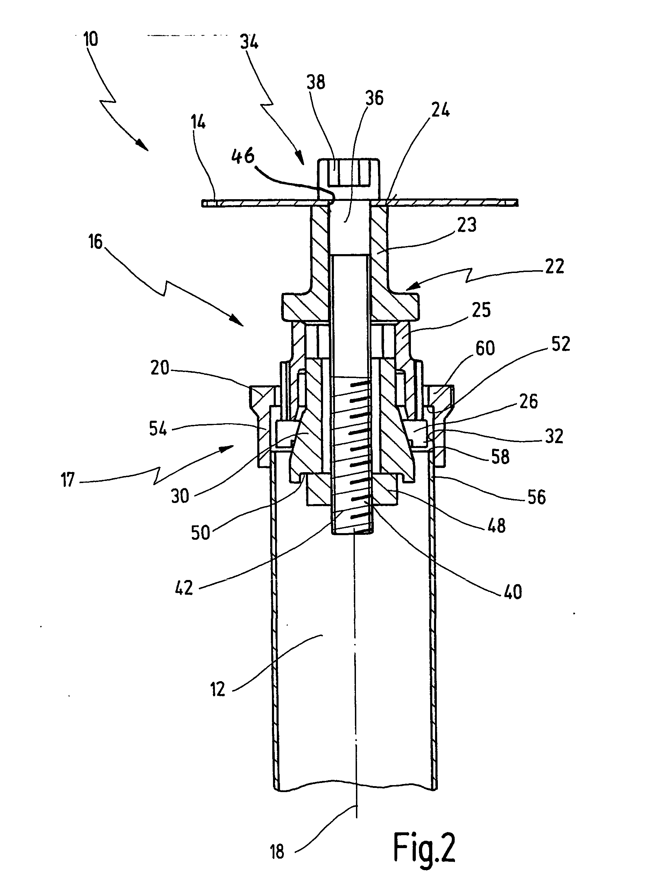

In Fig. 1 und 2 ist eine Anordnung 10 mit einem ersten Bauteil 12 und einem zweiten Bauteil 14 und einem mit dem allgemeinen Bezugszeichen 16 versehenen Verbindungselement dargestellt. Das Verbindungselement 16 dient zum Verbinden des ersten Bauteils 12 mit dem zweiten Bauteil 14. Das erste Bauteil 12 und das zweite Bauteil 14 sind in den Fig. 1 und 2 nur ausschnittsweise dargestellt.

Das erste Bauteil 12 ist in dem vorliegenden Anwendungsfall ein Zugrohr und das zweite Bauteil 14 eine A-Säule eines Kraftfahrzeuges. Ein mit dem zweiten Bauteil 14 zu verbindendes Ende 17 des ersten Bauteils 12 ist rohrförmig ausgebildet. Ferner erstreckt sich das zweite Bauteil 14 vorliegend im wesentlichen quer zu einer Längsrichtung bzw. Längsmittelachse 18 des ersten Bauteils 12. Wie aus Fig. 1 und 2 hervorgeht, steht ein äußerstes freies Ende 20 des ersten Bauteils 12 in Abstand zu dem zweiten Bauteil 14, und das erste Bauteil 12 ist in diesem Abstand mit dem zweiten Bauteil 14 zu verbinden.

Das Verbindungselement 16 weist ein axial, d. h. in Längsrichtung 18 bewegliches Distanzstück 22 auf, das in Form einer im wesentlichen zylindersymmetrischen Hülse 23 und einer in axialer Verlängerung der Hülse 23 angeordneten ebenfalls im Wesentlichen zylindersymmetrischen Hülse 25 ausgebildet ist. Die Hülsen 23 und 25 sind nicht fest miteinander verbunden. Das Distanzstück 22 weist auf seiner dem zweiten Bauteil 14 zugewandten Seite eine Anlagefläche 24 auf, wobei das Distanzstück 22 an dieser Seite ringartig verbreitert sein kann. Das Distanzstück 22 dient zum Überbrücken des Abstandes des äußersten freien Endes 20 des ersten Bauteils 12 von dem zweiten Bauteil 14. Entsprechend weist das Distanzstück 22 in Längsrichtung eine Länge auf, die größer ist als der Abstand zwischen dem freien Ende 20 des ersten Bauteils 12 und dem zweiten Bauteil 14.

Ein Außendurchmesser des Distanzstückes 22 hier der zweiten Hülse 25 entspricht etwa dem Innendurchmesser bzw. ist etwas kleiner als der Innendurchmesser des ersten Bauteils 12 im Bereich dessen Endes 17.

Das Verbindungselement 16 weist weiterhin ein Klemmstück 26 auf, das in Form eines Spreizringes oder als Klemmbacken ausgebildet ist. In nicht näher dargestellter Weise weist das Klemmstück 26 in Längsrichtung 18 verlaufende Einschnitte auf, die es ihm ermöglichen, sich quer zur Längsrichtung 18 zu spreizen, oder es können wie dargestellt umfänglich verteilt mehrere Klemmbacken angeordnet sein, die nicht oder nur über Sollbruchstellen miteinander verbunden sind.

Das Klemmstück 26 sitzt auf einem konischen Schieber 30, der relativ zu dem Distanzstück 22 axial beweglich ist, wenn das Verbindungselement 16 im unverspannten Zustand ist. In dieser Ausgestaltung sind das Distanzstück 22 und das Klemmstück 26 separate Elemente, die relativ zueinander beweglich sind.

Das Klemmstück 26 dient dazu, mit einer innenseitigen Wand 32 des ersten Bauteils 12 klemmend in Anlage gebracht zu werden, um das Verbindungselement 10 in dem ersten Bauteil 12 zu verankern.

Das Verbindungselement 16 weist als weitere Baugruppe einen Betätigungsmechanismus 34 auf. Der Betätigungsmechanismus 34 ist als Schraubmechanismus ausgebildet und umfaßt eine Schraube 36, die einen Schraubenkopf 38 und einen Schraubenschaft 40 aufweist. Der Schraubenschaft 40 weist ein Außengewinde 42 auf. Der Schraubenkopf 38 ist, wie in Fig. 1 zu erkennen ist, mit beispielsweise einem Innensechskant 44 zum Ansetzen eines Inbus-Schlüssels versehen. Der Schraubenkopf 38 sitzt auf dem zweiten Bauteil 14. Die Schraube 36 ist dabei durch eine Öffnung in dem zweiten Bauteil 14 durchgeführt.

Auf dem Schraubenschaft 40 sitzt eine Mutter 48, die mit einem Innengewinde versehen ist, über das die Mutter 48 mit dem Außengewinde 42 der Schraube 36 im Eingriff steht. Die Mutter 48 ist außenseitig als Vierkant ausgebildet. Die Hülsen 23 und 25, die das Distanzstück 22 bilden sowie der Schieber 30 sind dagegen auf dem Schaft 40 der Schraube gleitend verschiebbar angeordnet. Die Mutter 48 ist in einer Ausnehmung 50 des Schiebers 30 verdrehgesichert. Der Schieber 30 und vorzugsweise auch das Distanzstück 22 sind ebenfalls verdrehgesichert, d.h. können sich beim Drehen der Schraube 36 nicht mitdrehen.

Das erste Bauteil 12 ist im Bereich seines Endes 20 verstärkt, so dass das Verbindungselement 16 nicht durch Aufdehnung der Wand 32 des Bauteils 12 aus dem Bauteil 12 herausgezogen werden kann.

Das erste Bauteil 12 weist an seinem mit dem zweiten Bauteil 14 zu verbindenden Ende 17 eine zur Längsmittelachse 18 des ersten Bauteils 12 hin gerichtete Stufe 52 auf, vor der das Klemmstück 26 mit der Wand 32 des ersten Bauteils 12 in Eingriff kommt, wenn der Betätigungsmechanismus 34 betätigt bzw. die Schraube 36 gedreht wird. Das Klemmstück 26 kommt beim Anziehen der Schraube 36 vor der Stufe 52 oder dieser mit geringfügigem Abstand benachbart mit der Wand 32 des ersten Bauteils 12 klemmend in Eingriff. Bei hohen Zugbelastungen auf die Verbindung zwischen dem ersten Bauteil 12 und dem zweiten Bauteil 14 könnte es passieren, dass das Klemmstück 26 an der Wand 32 des ersten Bauteils 12 rutscht. Dieses Rutschen ist jedoch begrenzt, weil das Klemmstück 26 mit der Stufe 52 formschlüssig in Anlage kommt.

In dem gezeigten Ausführungsbeispiel ist das mit dem zweiten Bauteil 14 zu verbindende Ende 17 des ersten Bauteils 12 durch ein mit dem übrigen ersten Bauteil 12 verbundenes Ansatzstück 54 gebildet, an dem die Stufe 52 ausgebildet ist.

Das Ansatzstück 54 ist in Form einer Hülse ausgebildet, vorzugsweise in Form einer Überwurfhülse, die mit dem übrigen Teil 56 des ersten Bauteils 12 fest verbunden ist. Dazu übergreift das Ansatzstück 54 den Teil 56 des ersten Bauteils 12 außenseitig teilweise, wobei die beiden Teile im Überlappbereich beispielsweise miteinander verschweißt sind. Auf diese Weise wird eine zweite, zur Längsmittelachse 18 des ersten Bauteils 12 hin gerichtete Stufe 58 gebildet. Das Klemmstück 26 kommt mit der Wand 32 des somit ein Teil des ersten Bauteils 12 bildenden Ansatzstückes 54 im Bereich zwischen der ersten Stufe 52 und der zweiten Stufe 58 klemmend in Eingriff.

Im Bereich zwischen der ersten Stufe 52 und der zweiten Stufe 58 ist demnach eine Tasche ausgebildet, in der das Klemmstück 26 mit der Wand 32 klemmend in Eingriff kommt, wenn die Schraube 36 angezogen wird.

Die erste Stufe 52 ist vollumfänglich an dem rohrförmig ausgebildeten Ansatzstück 54 vorhanden und weist eine radial zur Längsmittelachse 18 hin gerichtete Erstreckung auf, die etwa der Wandstärke des Teils 56 des ersten Bauteils 12 entspricht oder größer als diese ist.

Des Weiteren ist das Ansatzstück 54 im Bereich der Stufe 52, im vorliegenden Fall an seinem dem zweiten Bauteil 14 zugewandten Ende mit einer radialen Verdickung bzw. Verstärkung 60 ausgestaltet. Im Übrigen weist das Ansatzstück 54 auch eine größere Wandstärke auf als der übrige Teil 56 des ersten Bauteils 12, wodurch eine radiale Aufbiegung des Endes 17 des ersten Bauteils 12 bzw. des Ansatzstücks 54 verhindert wird, wenn das Klemmstück 26 klemmend mit der Wand 32 in Eingriff gebracht wird.

Die Stufe kann beispielsweise auch durch eine Rohrendbearbeitung, beispielsweise Aufweiten oder Bördeln, als Kante oder Rand in einstückiger Ausgestaltung des ersten Bauteils 12 oder durch Einrollen einer Sicke, oder durch Anschweißen, Anlöten, Ankleben oder Aufschrumpfen einer Buchse an dem ersten Bauteil 12 ausgebildet werden. Wenn das erste Bauteil 12 oder zumindest das mit dem zweiten Bauteil 14 zu verbindende Ende 16 aus einem dickeren Material gefertigt ist, kann die zumindest eine Stufe 52 auch durch spanende Bearbeitung hergestellt werden.

Nachfolgend wird nunmehr die Funktion des Verbindungselements 16 beim Verbinden des ersten Bauteils 12 mit dem zweiten Bauteil 14 beschrieben.

Das vormontierte Verbindungselement 16 wird in das erste Bauteil 12 eingesetzt.

Anschließend wird die Schraube 36 mittels eines entsprechenden Werkzeuges, beispielsweise eines Inbus-Schlüssels, gedreht. Da die Mutter 48 verdrehgesichert ist, bewegt sich die Mutter 48 beim Drehen der Schraube 36 entlang dem Schaft 40 in Richtung zu dem zweiten Bauteil 14 und schiebt dabei über den Schieber 30 zunächst das Distanzstück 22 in Richtung zu dem zweiten Bauteil 14. Der Schieber 30 verschiebt dabei das Klemmstück 26 ebenfalls in Richtung zu dem zweiten Bauteil 14, wobei jedoch keine Relativbewegung zwischen dem Klemmstück 26 und dem Schieber 30 erfolgt. Zu Beginn der Betätigung des Betätigungsmechanismus 34 wird somit zunächst das Distanzstück 22 bis zur Anlage an das zweite Bauteil 14 bewegt, ohne dass das Klemmstück 26 mit der Wand 32 des ersten Bauteils 12 klemmend in Eingriff kommt. Dies beruht darauf, dass der Bewegung des Distanzstückes 22 ein geringerer Bewegungswiderstand entgegensteht als einer Relativverschiebung des Klemmstücks 26 zu dem konischen Abschnitt des Schiebers 30.

Bei fortlaufendem Drehen der Schraube 36 kommt die Anlagefläche 24 des Distanzstückes 22 mit dem zweiten Bauteil 14 in Anlage. Der Schraubenkopf 38 kommt seinerseits, wenn dies nicht bereits geschehen ist, der Anlagefläche 24 gegenüberliegend mit dem zweiten Bauteil 14 in Anlage.

Bei weiterem Drehen der Schraube 36 schiebt die Mutter 48 den Schieber 30 weiter in Richtung zu dem zweiten Bauteil 14 hin. Da das Distanzstück 22, d.h. die Hülsen 23 und 25 nunmehr bereits an dem zweiten Bauteil 14 axial unbeweglich anliegen, führt nun der Schieber 30 zu dem Distanzstück 22 eine axiale Relativbewegung aus. Da außerdem das Klemmstück 26 nunmehr axial unbeweglich ist, weil es an dem Distanzstück 22 anliegt, führt die axial zu dem zweiten Bauteil 14 hin gerichtete weitere Bewegung des Schiebers 30 zu einem Spreizen bzw. Aufweiten des Klemmstücks 26, so dass dieses mit der Wand 32 des ersten Bauteils 12, genauer gesagt des Ansatzstückes 54 zwischen der ersten Stufe 52 und der zweiten Stufe 58 klemmend in Eingriff kommt. Das erste Bauteil 12 ist nunmehr mit dem zweiten Bauteil 14 fest und starr verbunden.

Bei diesem Ausführungsbeispiel ist das Klemmstück 26 demnach so ausgebildet, dass es mittels des Betätigungsmechanismus 34 ausschließlich durch eine quer zur Längsrichtung 18 des ersten Bauteils 12 gerichtete Bewegung mit der Wand 32 des ersten Bauteils 12 in Eingriff bringbar ist.

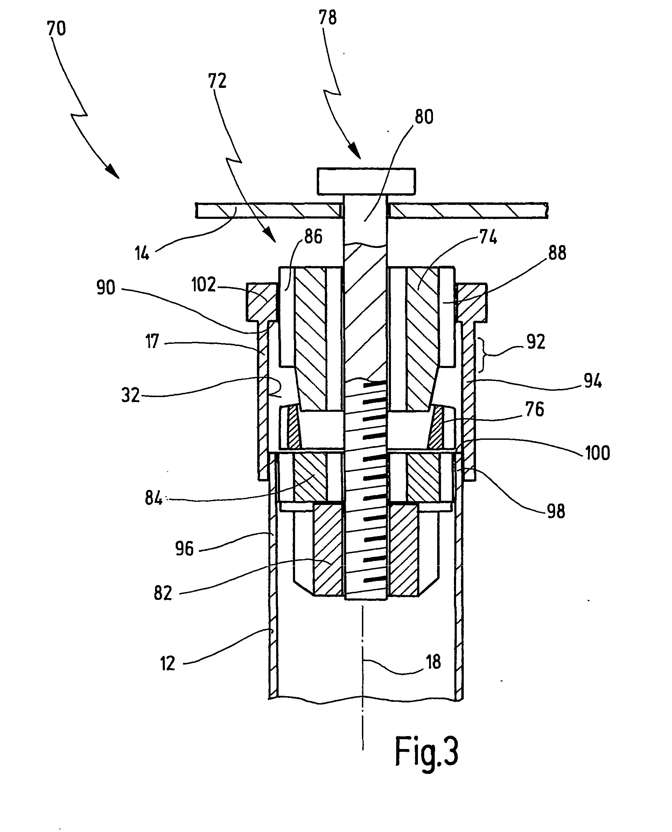

In Fig. 3 ist ein weiteres Ausführungsbeispiel einer Anordnung mit einem Verbindungselement 72 dargestellt.

Das Verbindungselement 72 weist ein Distanzstück 74, ein Klemmstück 76 und einen Betätigungsmechanismus 78 auf, wobei der Betätigungsmechanismus 78 wie bei dem zuvor beschriebenen Ausführungsbeispiel derart mit dem Distanzstück 74 und dem Klemmstück 76 in Wirkverbindung steht, dass vorzugsweise zu Beginn der Betätigung des Betätigungsmechanismus 78 das Distanzstück 74 axial bis zur Anlage an das zweite Bauteil 14 bewegt wird, und dass vorzugsweise bei weiterer Betätigung das Klemmstück 76 mit der Wand 32 des ersten Bauteils 12 klemmend in Eingriff kommt.

Der Betätigungsmechanismus 78 weist dazu eine Schraube 80 und eine Mutter 82 auf, die mit der Schraube 80 in Gewindeeingriff steht.

Zwischen der Mutter 82 und dem Klemmstück 76 ist ferner noch ein Schieber 84 in Form eines Ringes angeordnet.

Ferner weist das Verbindungselement 72 in nicht dargestellter Weise einen Korb auf, der die Anordnung aus dem Distanzstück 74, dem Klemmstück 76, dem Schieber 84 und der Mutter 82 umgibt, und zwar nicht vollumfänglich, sondern nur mit wenigen, beispielsweise zwei in Umfangsrichtung begrenzten Stegen, entlang der die Mutter 82, der Schieber 84, das Klemmstück 76 und das Distanzstück 74 verdrehgesichert sind. An ihrem Außenumfang sind das Distanzstück 74, das Klemmstück 76, der Schieber 84 und die Mutter 82 mit entsprechenden Nuten versehen, die in Fig. 3 zu sehen sind, und beispielsweise für das Distanzstück 74 mit dem Bezugszeichen 86 und 88 bezeichnet sind.

Das erste Bauteil 12 weist am mit dem zweiten Bauteil 14 zu verbindenden Ende 17 eine zur Längsmittelachse 18 des ersten Bauteils 12 gerichtete Stufe 90 auf, vor der das Klemmstück 76 mit der Wand 32 des ersten Bauteils 12 in Eingriff kommt, wenn der Betätigungsmechanismus 78 betätigt bzw. die Schraube 80 gedreht wird. Das Klemmstück 76 kommt beim Anziehen der Schraube 80 etwa an einer mit dem Bezugszeichen 92 bezeichneten Stelle der Wand 32 des ersten Bauteils 12 klemmend in Eingriff.

In dem gezeigten Ausführungsbeispiel ist das mit dem zweiten Bauteil 14 zu verbindende Ende 17 des ersten Bauteils 12 durch ein mit dem übrigen ersten Bauteil 12 verbundenes Ansatzstück 94 gebildet, an dem die Stufe 90 ausgebildet ist.

Das Ansatzstück 94 ist in Form einer Hülse ausgebildet, die mit dem übrigen Teil 96 des ersten Bauteils 12 fest verbunden ist. Dazu übergreift das Ansatzstück 94 den Teil 96 des ersten Bauteils 12 außenseitig teilweise an einer Stelle 98, an der die beiden Teile beispielsweise miteinander verschweißt sind. Auf diese Weise wird an der Stelle 98 eine zweite, zur Längsmittelachse 18 des ersten Bauteils 12 hin gerichtete Stufe 100 gebildet. Das Klemmstück 76 kommt mit der Wand 32 des Ansatzstücks 94 im Bereich zwischen der ersten Stufe 90 und der zweiten Stufe 100 klemmend in Eingriff, vorzugsweise an einer Stelle 92, die der ersten Stufe 90 näher liegt als der zweiten Stufe 100.

Die Stufe 90 ist vollumfänglich an dem rohrförmig ausgebildeten Ansatzstück 94 vorhanden und weist eine radial zur Längsmittelachse 18 hin gerichtete Erstreckung auf, die etwa der Wandstärke des Teils 96 des ersten Bauteils 12 entspricht.

Des weiteren ist das Ansatzstück 84 im Bereich der Stufe 90, im vorliegenden Fall an seinem dem zweiten Bauteil 14 zugewandten Ende 102, mit einer Verdickung ausgestaltet. Im übrigen weist das Ansatzstück 94 auch eine größere Wandstärke auf als der übrige Teil 96 des ersten Bauteils 12.

Des weiteren kann an dem Ansatzstück 94 vorzugsweise auf Höhe der ersten Stufe 90 noch ein Flansch vorgesehen sein, der eine radiale Aufbiegung des Ansatzstücks 94 im Bereich der Stufe 90 zusätzlich verhindert.

Die Funktionsweise der Anordnung 70 ist wie folgt.

Nachdem das Verbindungselement 72 ohne die Schraube 80 in das erste Bauteil 12 eingesetzt wurde, wird die Schraube 80 mit der Mutter 82 verschraubt. Dabei bewegt sich die Mutter 82 axial in Richtung zu dem zweiten Bauteil 14 hin und schiebt dabei zunächst den Schieber 84, das Klemmstück 76 und das Distanzstück 74 zu dem zweiten Bauteil 14 hin, bis das Distanzstück 74 an letzterem anliegt.

Da sich bei weiterem Drehen der Schraube 80 das Distanzstück 74 nunmehr nicht weiter axial bewegen kann, schiebt die Mutter 82 über den Schieber 84 das Klemmstück 76 auf den konischen Abschnitt des Distanzstückes 74 auf, wodurch das Klemmstück 76 gespreizt bzw. aufgeweitet wird, bis es mit der Wand 32 des ersten Bauteils 12, genauer gesagt des Ansatzstückes 94, klemmend in Eingriff kommt.

Bei diesem Ausführungsbeispiel ist das Verbindungselement 72 demnach so ausgebildet, dass das Klemmstück 76 mittels des Betätigungsmechanismus 78 durch eine Überlagerung aus einer axialen und einer quer zur Längsrichtung 18 des ersten Bauteils 12 gerichteten Bewegung mit der Wand 32 des ersten Bauteils 12 in Eingriff bringbar ist. Durch die Überlagerung aus einer axialen und einer radialen Bewegung des Klemmstücks 76 kann sich letzteres in das Material der Wand 32 des ersten Bauteils 12 eingraben, wodurch nicht nur ein reibschlüssiger, sondern auch ein teilweise formschlüssiger Eingriff zwischen dem Klemmstück 76 und der Wand 32 des ersten Bauteils 12 erreicht wird.

## Patentansprüche

1. Anordnung mit einem ersten Bauteil (12) und einem zweiten Bauteil (14), und mit einem Verbindungselement (16; 72) zum beabstandeten verbinden des ersten Bauteils (12) mit dem zweiten Bauteil (14), wobei das erste Bauteil (12) zumindest an einem mit dem zweiten Bauteil (14) zu verbindenden Ende (17) als Profil, insbesondere rohrförmig, ausgebildet ist, welches Profil eine Längsmittelachse definiert, wobei das Verbindungselement (16; 72) ein axial bewegliches Distanzstück (22; 74) zum Überbrücken des Abstandes des zu verbindenden Endes (17) des ersten Bauteils (12) zu dem zweiten Bauteil (14), weiterhin zumindest ein mit einer Wand (32) des ersten Bauteils (12) klemmend in Anlage bringbares Klemmstück (26; 76) und ferner einen Betätigungsmechanismus (34; 78) aufweist, der mit dem Distanzstück (22; 74) und dem Klemmstück (26; 76) derart in wirkverbindung steht, dass bei Betätigung des Betätigungsmechanismus (34; 78) das Distanzstück (22; 78) axial bis zur Anlage an das zweite Bauteil (14) bewegt und das Klemmstück (26, 76) mit der Wand (32) des ersten Bauteils (12) klemmend in Eingriff gebracht wird, **dadurch gekennzeichnet, dass** am mit dem zweiten Bauteil (14) zu verbindenden Ende (17) des ersten Bauteils (12) eine zur Längsmittelachse (18) des ersten Bauteils (12) gerichtete erste Stufe (52; 90) und eine zur Längsmittelachse (18) des ersten Bauteils gerichtete zweite Stufe (58; 100) vorhanden ist, die von der ersten Stufe (52; 90) axial beabstandet ist, wobei das zumindest eine Klemmstück (26; 76) zwischen der ersten Stufe (52; 90) und der zweiten Stufe (58; 100) mit der Wand (32) des ersten Bauteils (12) in Eingriff kommt.

2. Anordnung nach Anspruch 1, **dadurch gekennzeichnet, dass** das mit dem zweiten Bauteil (14) zu verbindende Ende (16) des ersten Bauteils (12) rohrförmig ausgebildet ist, und dass sich die erste und/oder zweite Stufe (52; 58) vollumfänglich an der Wand (32) des ersten Bauteils (12) erstreckt.

3. Anordnung nach Anspruch 1 oder 2, **dadurch gekennzeichnet, dass** die erste und/oder zweite Stufe (52; 58) an einem mit dem ersten Bauteil (12) fest verbundenen Ansatzstück (54; 90) ausgebildet ist, das das erste Bauteil (12) außenseitig teilweise übergreift.

4. Anordnung nach einem der Ansprüche 1 bis 3, **dadurch gekennzeichnet, dass** das Distanzstück (22; 74) und das Klemmstück (26; 76) als separate Elemente ausgebildet sind.

5. Anordnung nach einem der Ansprüche 1 bis 4, **dadurch gekennzeichnet, dass** das Verbindungselement (16; 72) so ausgebildet ist, dass das Klemmstück (26; 76) mittels des Betätigungsmechanismus durch eine Überlagerung aus einer axialen und einer quer zur Längsrichtung (18) des ersten Bauteils (12) gerichteten Bewegung oder nur durch eine quer zur Längsrichtung (18) des ersten Bauteils (12) gerichtete Bewegung mit der Wand (32) des ersten Bauteils (12) in Eingriff bringbar ist.

6. Anordnung nach einem der Ansprüche 1 bis 5, **dadurch gekennzeichnet, dass** der Betätigungsmechanismus (34, 78) einen Schraubmechanismus aufweist, dessen fortlaufende Betätigung zunächst das Distanzstück (22; 74) mit dem zweiten Bauteil (14) in Anlage und anschließend das Klemmstück (26; 76) mit der Wand (32) des ersten Bauteils (12) in Eingriff bringt.

7. Anordnung nach Anspruch 6, **dadurch gekennzeichnet, dass** der Schraubmechanismus eine Schraube (36; 80) aufweist, mit der eine Mutter (48; 82) in Gewindeeingriff steht, die sich beim Drehen der Schraube (36; 80) in Richtung auf das zweite Bauteil (14) zu bewegt und dabei direkt oder indirekt das Distanzstück (22; 74) axial bewegt.

8. Anordnung nach Anspruch 7, **dadurch gekennzeichnet, dass** die Mutter (42; 82) beim Drehen der Schraube (36; 80) direkt oder indirekt auf das Klemmstück (26; 76) wirkt, um dieses mit der Wand (32) des ersten Bauteils (12) in Eingriff zu bringen.

9. Anordnung nach einem der Ansprüche 1 bis 8, **dadurch gekennzeichnet, dass** das erste Bauteil (12) ein Zugrohr und das zweite Bauteil (14) zumindest eine der A-Säulen einer Fahrzeugkarosserie ist.

## Claims

1. An arrangement, comprising a first component (12) and a second component (14), and comprising a connecting element (16; 72) for connecting the first component (12) to the second component (14) at a distance from one another, the first component (12), at least at an end (17) that is to be connected to the second component (14), being in profiled section, in particular tubular, form, which profiled section defines a longitudinal center axis, the connecting element (16; 72) having an axially moveable spacer piece (22; 74) for bridging the distance between that end (17) of the first component (12) which is to be connected and the second component (14), and also having at least one clamping piece (26; 76), that can be brought into contact in a clamping manner with a wall (32) of the first component (12), and furthermore an actuating mechanism (34; 78) that is operatively connected to the spacer piece (22; 74) and the clamping piece (26; 76) in such a manner that when the actuating mechanism (34; 78) is actuated, the spacer piece (22; 78) moves in the axial direction until it comes into contact with the second component (14) and the clamping piece (26, 76) is brought into clamping engagement with the wall (32) of the first component (12), **characterized in that** at that end (17) of the first component (12) which is to be connected to the second component (14) there is a first step (52; 90), which is directed toward the longitudinal center axis (18) of the first component (12), and a second step (58; 100), which is directed toward the longitudinal center axis (18) of the first component, and which is at an axial distance from the first step (52; 90), wherein the at least one clamping piece (26; 76) comes into engagement with the wall (32) of the first component (12) between the first step (52; 90) and the second step (58; 100).

2. The arrangement of claim 1, **characterized in that that** end (16) of the first component (12) which is to be connected to the second component (14) is tubular in form, and wherein the first and/or second step (52; 58) extends over the entire circumference of the wall (32) of the first component (12).

3. The arrangement of claim 1 or 2, **characterized in that** the first and/or second step (52; 58) is formed on an attachment piece (54; 90) which is fixedly connected to the first component (12) and partially engages over the outside of the first component (12).

4. The arrangement of any one of claims 1 through 3, **characterized in that** the spacer piece (22; 74) and the clamping piece (26; 76) are formed as separate elements.

5. The arrangement of any one of claims 1 through 4, **characterized in that** the connecting element (16; 72) is designed in such a way that the clamping piece (26; 76) can be brought into engagement with the wall (32) of the first component (12) by means of the actuating mechanism as a result of a superimposed axial movement and a movement directed transversely with respect to the longitudinal direction (18) of the first component (12) or only as a result of a movement directed transversely with respect to the longitudinal direction (18) of the first component (12).

6. The arrangement of any one of claims 1 through 5, **characterized in that** the actuating mechanism (34, 78) has a screw mechanism, the continuing actuation of which firstly brings the spacer piece (22; 74) into contact with the second component (14) and then brings the clamping piece (26; 76) into engagement with the wall (32) of the first component (12).

7. The arrangement of claim 7, **characterized in that** the screw mechanism has a screw (36; 80), with which a nut (48; 82) is in threaded engagement, which nut moves toward the second component (14) when the screw (36; 80) is turned, in the process moving the spacer piece (22; 74) in the axial direction either directly or indirectly.

8. The arrangement of claim 7, **characterized in that** the nut (42; 82), when the screw (36; 80) is turning, acts directly or indirectly on the clamping piece (26; 76) in order to bring it into engagement with the wall (32) of the first component (12).

9. The arrangement of any one of claims 1 through 8, **characterized in that** the first component (12) is a tensioning tube, and the second component (14) is at least one of the A-pillars of a vehicle body.

## Revendications

1. Dispositif comportant un premier composant (12) et un deuxième composant (14) ainsi qu'un élément de liaison (16; 72) pour relier de manière espacée le premier composant (12) au deuxième composant (14), dans lequel le premier composant (12) est réalisé en tant que profilé, en particulier de forme tubulaire, au moins à une extrémité (17) à relier au deuxième composant (14), lequel profilé définit un axe médian longitudinal, dans lequel l'élément de liaison (16; 72) comporte un écarteur (22 ; 74) mobile axialement pour franchir la distance entre l'extrémité (17) à relier du premier composant (12) et le deuxième composant (14), ainsi qu'au moins une pièce de serrage (26 ; 76) pouvant être amenée en contact avec serrage avec une paroi (32) du premier composant (12), et qui comporte en outre un mécanisme d'actionnement (34 ; 78) qui est en liaison active avec l'écarteur (22 ; 74) et la pièce de serrage (26 ; 76) de manière que lorsque le mécanisme d'actionnement (34 ; 78) est actionné, l'écarteur (22 ; 78) est déplacé axialement jusqu'au contact avec le composant (14), et la pièce de serrage (26 ; 76) est amenée en prise avec serrage avec la paroi (32) du premier composant (12), **caractérisé en ce qu'**à l'extrémité (17), à relier au deuxième composant (14), du premier composant (12), il est prévu un premier gradin (52 ; 90) dirigé vers l'axe médian longitudinal (18) du premier composant (12) et un deuxième gradin (58 ; 100) dirigé vers l'axe médian longitudinal (18) du premier composant, lequel est espacé axialement du premier gradin (52 ; 90), la ou les pièces de serrage (26 ; 76) venant en prise, entre le premier gradin (52 ; 90) et le deuxième gradin (58 ; 100), avec la paroi (32) du premier composant (12).

2. Dispositif selon la revendication 1, **caractérisé en ce que** l'extrémité (16), à relier au deuxième composant (14), du premier composant (12), est réalisée en forme tubulaire et **en ce que** le premier et/ou le deuxième gradin (52 ; 58) s'étendent sur toute la périphérie sur la paroi (32) du premier composant (12).

3. Dispositif selon la revendication 1 ou 2, **caractérisé en ce que** le premier et/ou le deuxième gradin (52 ; 58) sont réalisés sur un appendice (54 ; 90) solidaire du premier composant (12), qui passe en partie extérieurement sur le premier composant (12).

4. Dispositif selon l'une des revendications 1 à 3, **caractérisé en ce que** l'écarteur (22 ; 74) et la pièce de serrage (26 ; 76) sont réalisés comme éléments séparés.

5. Dispositif selon l'une des revendications 1 à 4, **caractérisé en ce que** l'élément de liaison (16 ; 72) est réalisé de manière que la pièce de serrage (26 ; 76) puisse être amenée en prise avec la paroi (32) du premier composant (12), au moyen du mécanisme d'actionnement, par superposition d'un mouvement axial et d'un mouvement orienté transversalement à la direction longitudinale (18) du premier composant (12), ou uniquement par un mouvement orienté transversalement à la direction longitudinale (18) du premier composant (12).

6. Dispositif selon l'une des revendications 1 à 5, **caractérisé en ce que** le mécanisme d'actionnement (34 ; 78) comporte un mécanisme à vis dont l'actionnement continu amène d'abord l'écarteur (22 ; 74) en contact avec le deuxième composant (14) puis la pièce de serrage (26 ; 76) en prise avec la paroi (32) du premier composant (12).

7. Dispositif selon la revendication 6, **caractérisé en ce que** le mécanisme à vis comporte une vis (36; 80) qui est en engagement fileté avec un écrou (48 ; 82) qui, lors de la rotation de la vis (36; 80), se déplace en direction du deuxième composant (14) et déplace ainsi axialement l'écarteur (22 ; 74), directement ou indirectement.

8. Dispositif selon la revendication 7, **caractérisé en ce que** lors de la rotation de la vis (36 ; 80), l'écrou (42 ; 82) agit directement ou indirectement sur la pièce de serrage (26 ; 76), afin d'amener celle-ci en prise avec la paroi (32) du premier composant (12)..

9. Dispositif selon l'une des revendications 1 à 8, **caractérisé en ce que** le premier composant (12) est un tirant tubulaire et le deuxième composant (14) est au moins l'un des montants (A) de la carrosserie d'un véhicule.
